# EUROPÄISCHE PATENTANMELDUNG

(11) **EP 0 585 480 A1**
(43) Veröffentlichungstag der Anmeldung: **09.03.1994**
(21) Anmeldenummer: 92114860.7
(22) Anmeldetag: 31.08.1992
(51) Int. Cl.: H04Q 11/04, H04M 3/56, H04M 3/42

(54) **Verfahren und Anordnung zur Herstellung von Konferenzverbindungen in einem rechnergesteuerten Fernsprechvermittlungssystem**

(71) Anmelder: SIEMENS AKTIENGESELLSCHAFT, D-80333 München (DE)
(72) Erfinder: Myo-Kyaw, Maung, W-8035 Stockdorf (DE)

(57) **Zusammenfassung**

Die Erfindung betrifft ein Verfahren und eine Anordnung zur Herstellung von Konferenzverbindungen in einem rechnergesteuerten Fernsprechvermittlungssystem (PBX). Ein der Systemsteuerung (CC,CS) zugeordnetes Programm ist in der Weise ausgestaltet, daß in Abhängigkeit von in ein oder in mehrere an der Konferenzverbindung beteiligte Teilnehmerendgeräte (T) eingebbare Informationen eine oder mehrere automatische Übersetzungseinrichtungen (TREJ,TREF,TRJF...) zwischen jeweils zwei an der Konferenzverbindung beteiligte Endgeräte eingeschleift werden.

## Beschreibung

Es sind unterschiedliche Fernsprechnebenstellenanlagen bekannt, die neben der eigentlichen Vermittlungssteuerung auch zu einer Steuerung bzw. Realisierung zusätzlicher, über den eigentlichen Vermittlungsvorgang hinausgehender Steuervorgänge befähigt sind. Solche zusätzlichen Funktionen werden im allgemeinen als Leistungsmerkmale bezeichnet, wobei hierbei insbesondere für den Kommunikationsdienst "Sprache" eine große Zahl unterschiedlicher Leistungsmerkmale bekannt ist. Zu solchen Leistungsmerkmalen zählen beispielsweise die Darstellung von Bedienerhinweisen auf optischen Anzeigeeinrichtungen der Endgeräte, Anrufumleitung (Call forwarding) und Konferenzverbindungen.

Aus den Produktschriften der Fa. Siemens "HICOM 600 System Product Data", Bestell-Nr. A19100-K 3161-G430-01-7600 (Seite 37), und "ISDN in the Office", Special Issue of Telcom Report and Siemens Magazin COM, Seiten 56 bis 64, ISBN 3-8009-3849-9 ist bereits eine rechnergesteuerte Fernsprechnebenstellenanlage bekannt, die Konferenzverbindungen herstellt. Die bekannte Fernsprechnebenstellenanlage realisiert sowohl das Leistungsmerkmal "Dreierkonferenz" als auch das Leistungsmerkmal "feste Konferenz". Das Leistungsmerkmal "Dreierkonferenz" ermöglicht das Hinzuschalten eines beliebigen dritten Teilnehmers zu einer beliebigen bestehenden Verbindung, wobei der dritte Teilnehmer gezielt aus der Konferenz herausgeschaltet werden kann. Das Leistungsmerkmal "feste Konferenz" ermöglicht den Teilnehmern ein gleichzeitiges Anrufen und Hinzuschalten mehrerer beliebig festgelegter Teilnehmer mit einer Wahl. Dabei können Teilnehmer mit digitalen Terminals während der Konferenz beispielsweise weitere Teilnehmer hinzuschalten, einen Teilnehmer aus der Konferenz herausschalten und vorübergehend mit einem Konferenzteilnehmer allein sprechen.

Mit der zunehmenden Internationalisierung des Fernsprechverkehrs nimmt die Wahrscheinlichkeit dafür zu, daß potentielle Fernsprechteilnehmer unterschiedlicher Muttersprache in Verbindung treten wollen. Ergibt sich nach dem Aufbau einer Fernsprechverbindung, daß beide potentiellen Gesprächspartner nicht über Sprachkenntnisse derselben Sprache verfügen, so wird die aufgebaute Fernsprechverbindung beendet, ohne daß die gewünschte Mitteilung vom Gesprächspartner verstanden wird. Konferenzverbindungen lassen sich über vernetzte Vermittlungssysteme und länderübergreifend herstellen. Hier besteht die Gefahr, daß mindestens ein Konferenzteilnehmer mangels entsprechender Sprachkenntnisse die mitgeteilten Informationen nicht versteht bzw. daß die von ihm mitgeteilten Informationen von anderen Konferenzteilnehmern nicht verstanden werden.

Der Erfindung liegt die Aufgabe zugrunde, ein Verfahren der im Oberbegriff des Patentanspruchs 1 angegebenen Art anzugeben, das Konferenzverbindungen zwischen Teilnehmern unterschiedlicher Sprachkenntnisse fördert. Die Lösung dieser Aufgabe erfolgt erfindungsgemäß mit den Merkmalen des Patentanspruchs 1.

Bestehende Fernsprechvermittlungssysteme lassen sich durch relativ einfache Hardware- bzw. Softwareänderungen für die Durchführung des erfindungsgemäßen Verfahrens ausgestalten. Betreiber eines derartigen Fernsprechvermittlungssystems können damit in einfacher Weise einen weiteren Dienst zur Verfügung stellen, ohne die Verwendungsmöglichkeiten des Fernsprechvermittlungssystems in anderer Weise einzuschränken.

Die Eingabe der Informationen, die das Zuschalten der Übersetzungseinrichtungen auslösen, erfolgt dabei in einfacher Weise entweder durch Wahl einer Rufnummer am jeweiligen Teilnehmerendgerät oder durch Sprachproben in der Sprache, in der der jeweilige Konferenzteilnehmer das folgende Gespräch im Rahmen der Konferenzverbindung führen will. Die Zuschaltung der Übersetzungseinrichtungen hängt von den jeweils eingegebenen Informationen ab; gegebenenfalls, das heißt bei übereinstimmenden, dieselbe Sprache bezeichnenden Informationen wird zwischen die entsprechenden Teilnehmerendgeräte keine Übersetzungseinrichtung eingeschleift. Dies kann sich insbesondere dann ergeben, wenn nach einer weiteren vorteilhaften Ausführungsform des erfindungsgemäßen Verfahrens in die an der Konferenzverbindung beteiligten Teilnehmerendgeräte mehrere verschiedene Sprachen bezeichnende Informationen eingebbar sind. Dies erweist sich auch insoweit als vorteilhaft, als die verschiedenen Konferenzteilnehmer sich nicht verbal über eine gemeinsame Sprache abzusprechen haben, sondern daß die Wahl der entsprechenden Sprache in einfacher Weise und innerhalb kurzer Zeit erfolgt. Dieser Vorteil ist insbesondere dann ausgeprägt, wenn eine Mehrzahl von Teilnehmern an der Konferenzverbindung beteiligt sind.

Die Erfindung wird nun anhand von Zeichnungen näher beschrieben.

Es zeigt
- Fig. 1: ein Fernsprechvermittlungssystem zur Durchführung des erfindungsgemäßen Verfahrens,
- Fig. 2: die Struktur einer Datenbasis des Systems nach Anspruch 1 und die Verbindung erster und zweiter Speicher im Zusammenhang mit Konferenzverbindungen,
- Fig. 3: die Struktur der ersten und zweiten Speicher nach Fig. 2,
- Fig. 4: verschiedene Konfigurationen von an einer Konferenzverbindung beteiligten Endgeräten im Zusammenwirken mit einer Übersetzungseinrichtung und
- Fig. 5: ein Flußdiagramm mit Verfahrensschritten des erfindungsgemäßen Verfahrens.

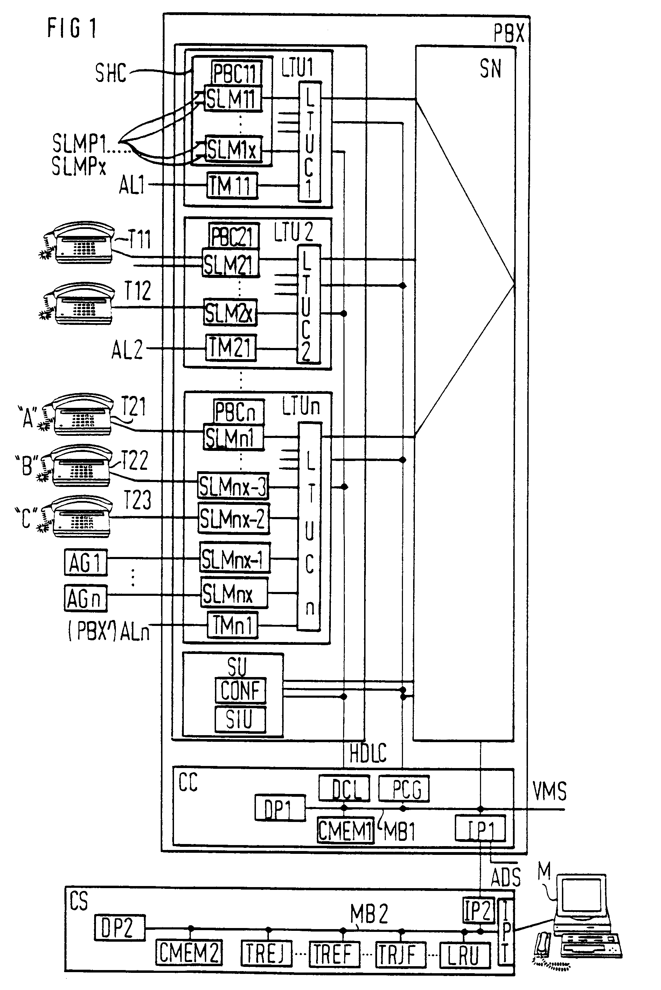

Das in der Figur 1 dargestellte Fernsprechvermittlungssystem kann wie die in den eingangs beschriebenen Produktschriften offenbarte Nebenstellenanlage bzw. wie das Fernmeldevermittlungssystem strukturiert sein, das in den veröffentlichten europäischen Patentanmeldungen EP 0 306 693 A1 (US-PS 4,903,258), EP 0 303 870 A2 (US-PS 5,018,097) und EP 0 303 869 A1 (US-PS 5,047,923) sowie in den deutschen Offenlegungsschriften DE 38 18 086 offenbart ist. Der Software- Architektur des bekannten Systems liegen die folgenden Kriterien zugrunde: Das erste Architektur-Kriterium betrifft die Dreiteilung der Vermittlungs-Software in die Funktionskomplexe Peripherietechnik PP (peripheral processing), Leitungstechnik DH (device handler) und Vermittlungstechnik CP (call processing). Dabei nimmt die Peripherietechnik PP die Transportfunktion wahr und läuft im wesentlichen auf den Anschlußbaugruppen für die Endgeräte und Leitungen. Die Leitungstechnik DH hat die Aufgabe, die Schnittstelle zu Peripherietechnik PP an die ISDN-Schnittstellen zur Vermittlungstechnik CP anzupassen. Die Vermittlungstechnik CP erbringt die eigentlichen Leistungen für die Benutzeroberflächen der Endgeräte bzw. für die Schnittstellen zu den verschiedenen Sätzen.

Das zweite Architektur-Kriterium stellt die an Dienste und Endgeräten orientierte Zustands- bzw. Anreizverarbeitung in der Vermittlungstechnik CP dar. Das Dienstekriterium wird als ISDN-Protokollelement der Steuerungs-Software angeboten, die dienstspezifisch aufgrund der mitgelieferten Geräteadresse den Gerätetyp ermittelt.

Das dritte Architektur-Kriterium zur einfachen Behandlung der Endgeräte- und Dienstevielfalt besteht in der strikten Anwendung der eigenständigen Datenbasis, auf welche die Programme prinzipiell nur auf logischer Ebene zugreifen.

Das in Figur 1 dargestellte System besteht aus einer Systemzentrale PBX mit einem Steuerwerk CC ("erste Steuerung"), das mit sogenannten Peripheriemodulen und einem Koppelnetz SN verbindbar ist. Die Peripheriemodule umfassen insbesondere Teilnehmeranschlußschaltungen SLM11...SLM1X, SLM21...SLM2X, SLMn1 ...SLMnX sowie sogenannte Leitungssatzschaltungen TM11, TM21 und TMn1.

Die Teilnehmeranschlußschaltungen SLM sind teilnehmerorientierte Geräteanschlüsse, wie beispielsweise ISDN-Basisanschlüsse für digitale mono- und multifunktionale Endgeräte, 1-Kanal-Anschlußmodule für Endgeräte, wie digitale Sprachendgeräte und Vermittlungsendgeräte sowie Teilnehmeranschlüsse für analoge Sprachendgeräte. Die in Figur 1 dargestellten Endgeräte T11,T12,T21(="A"), T22 (="B"),T23 (="C") sind vorzugsweise digitale Sprachendgeräte, während das Endgerät M ein Datenendgerät darstellt und beispielsweise einem Vermittlungsplatz zugeordnet ist. An Teilnehmerschaltungen SLMnx-1, SLMnx sind Ansagegeräte AG1...AGn geschaltet. Die Ansagegeräte dienen der Bedienerführung und fordern, wie noch beschrieben wird, den rufenden Teilnehmer auf, eine fremdsprachindividuelle Rufnummer nachzuwählen bzw. eine Sprachprobe derjenigen Sprache einzugeben, in der das Ferngespräch geführt werden soll.

Die Leitungssatzschaltungen TM11, TM21, TMn1 dienen zur Verbindung mit öffentlichen und/oder privaten Netzen bzw. Sondereinrichtungen und sind beispielsweise ISDN-Basisanschlüsse für ISDN-Amtsverkehr (Amtsleitungen AL1, AL2, ALn) und ISDN-Querverkehr (2 Kanäle zu 64 kBit/s und ISDN-Signalisierung) sowie digitale Schnittstelleneinheiten (digital interface unit), d. h. Multiplexanschlüsse (30 Kanäle zu je 64 kBit/s) mit den Betriebsarten Amts- und Querverkehr mit ISDN-Signalisierung, Querverkehr mit kanalassoziierter Signalisierung.

Alle Peripheriemodule SLM11..., TM11... haben die gleichen systeminternen Schnittstellen. Sie koppeln die einzelnen Basiskanäle B, auf denen Nutzdaten, d. h. Sprach- und/oder Dateninformationen übertragen werden, an eine beliebige Auswahl aus zwei Multiplexkanälen (highways) mit beispielsweise 32 Kanälen des Koppelnetzes SN und übergeben die in einem Steuerkanal D übertragenen Signalisierungsinformationen als HDLC-Protokoll an die erste Steuerung CC. Jedes Peripheriemodul weist eine Steuerung PBC11... auf, deren Aufgabe es ist, belegte Anschlußkanäle zu ausgewählten Kanälen der Multiplexkanäle gegebenenfalls mit einer Steuerung LTUC1... einer zugehörigen Anschlußeinheit LTU1... zuzuordnen (europäische Patente 0 113 884 und 0 264 890, US-Patent 4,694,452).

Mehrere Peripheriemodule können funktionell zu einer Anschlußeinheit LTU zusammengefaßt werden. Jeder Anschlußeinheit LTU1 ...LTUn ist eine Steuerung LTUC1...LTUCn zugeordnet und mit dem Koppelnetz SN über beispielsweise vier Sprach-Daten-Multiplexkanäle miteinander verbunden. Der Meldungsaustausch zwischen den Peripheriemodulen und der ersten Steuerung CC erfolgt über einen Signalisierungskanal, der in Figur 1 mit dem Bezugszeichen HDLC bezeichnet ist, im bekannten HDLC-Punkt- zu -Mehrpunkt-Verfahren.

Mehreren Anschlußeinheiten LTU1...LTUn kann eine sogenannte Serviceeinheit SU zugeordnet sein. Diese umfaßt eine Signalisierungseinheit SIU und gegebenenfalls eine Konferenzeinrichtung CONF. Die Signalisierungseinheit SIU übernimmt die Zeichenversorgung des Systems mit Hörtönen und gegebenenfalls mit Ansagen, sowie den Empfang von MFV-Taktwahlzeichen z.B. die durch Wahl von zusätzlichen Rufnummern gebildeten Zusatzinformationen und Amtswähltönen. Diese Funktion wird in an sich bekannter Weise mit Signalprozessoren realisiert.

Die Signalisierungseinheit SIU ist über zwei Sprach-Daten-Multiplexkanäle bei fester Funktionszuordnung mit dem Koppelnetz SN verbunden.

Das Koppelnetz SN ist vorzugsweise modular aufgebaut und besteht beispielsweise aus einer blockierungsfreien Zeitstufe für 16-Sprach-Daten-Multiplexkanäle. Durch Zusammenschalten zweier derartiger Grundmodule entsteht eine Koppelstufe für 1024 Zeitlagen (32 Multiplexkanäle zu je 32 Kanälen). Die in dieser Weise gebildete blockierungsfreie Zeitstufe verbindet von den je 32 ankommenden und abgehenden Multiplexkanälen für Sprache oder Daten jeweils zwei beliebige der 32 Zeitlagen miteinander. Neben 1-Kanal-Verbindungen können auch Breitbandverbindungen hergestellt werden.

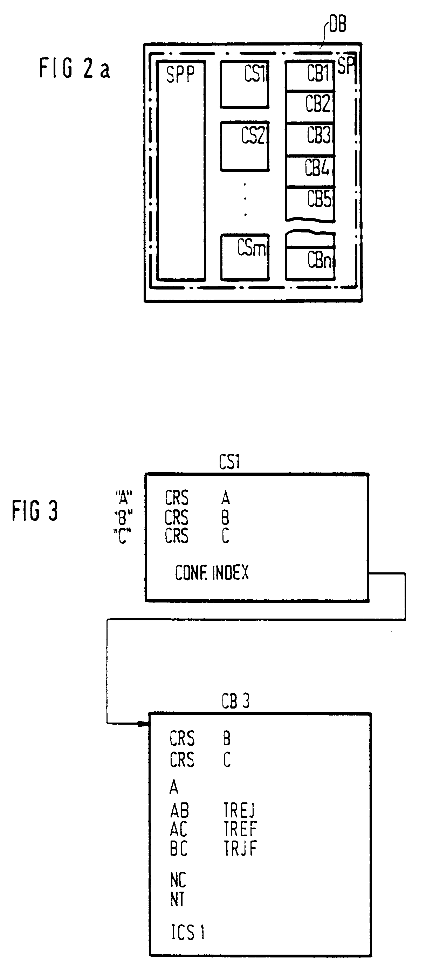

Die erste Steuerung CC übernimmt die entsprechend dem Peripherieaufbau anfallende vermittlungstechnische Verarbeitung. Sie besteht aus einem Datenprozessor DP1, einem Prozessor für Signalisierungssteuerung DCL, einem Taktgenerator PCG, einem Speicher CMEM1 und einem Schnittstellenprozessor IP1, der mit einer betriebstechnischen Einheit ADS verbindbar ist. Der Speicher CMEM1 enthält eine Datenbasis (DB,Fig. 2a) mit Konfigurationsdaten sowie das der Steuerung CC zugeordnete Programm. Die genannten Komponenten sind über einen Multibus MB1, wie in der Figur dargestellt, miteinander verbunden. Die betriebstechnische Einheit ADS ist mit dem Prozessor IP1 verbindbar. An diesen ist auch ein adaptiver Server mit einer zweiten Steuerung CS (Control Server) angekoppelt. Die Steuerung CS umfaßt einen Datenprozessor DP2, einen Speicher CMEM2 und Schnittstellenprozessoren IP2 und IPT. Ferner umfaßt die Steuerung CS Übersetzungseinrichtungen TREJ,... TREF,... TRJF, die der Übersetzung von der englischen Sprache (E) in die japanische Sprache (J), von der englischen Sprache in die französische Sprache (F) bzw. von der japanischen Sprache in die französische Sprache und jeweils in umgekehrter Übersetzungsrichtung dienen, sowie gegebenenfalls auch eine Spracherkennungseinrichtung LRU (language recognition unit) und Schnittstellenprozessoren IP2 und IPT. Die genannten Komponenten sind, wie in Fig. 1 dargestellt, miteinander verbunden. Im Speicher CMEM2 ist das der Steuerung CS zugeordnete Programm abgelegt. Das Fernsprechvermittlungssystem kann jeweils mehrere Übersetzungseinrichtungen z.B. TREJ aufweisen, die der Übersetzung zweier vorgegebener Sprachen dienen. Die Erfindung bezieht sich auch auf Fernsprechvermittlungssysteme, die nur eine Art von Übersetzungseinrichtungen, z.B. TREJ, aufweisen.

Als Übersetzungseinrichtungen TREJ,TREF,TRJF werden Einrichtungen verwendet, die beispielsweise im US-Patent 4,958,366 und in den europäischen Patentanmeldungen mit den Veröffentlichungsnummern 311 416 und 449 230 beschrieben sind.

Als Spracherkennungseinrichtung LRU wird vorzugsweise eine Einrichtung verwendet, die in den folgenden Literaturstellen offenbart ist: Goodman et. al.:"improved automatic language identification in noisy speech", CH2673-2/89/ 0000-0528, 1989 IEEE, Seiten 528-531; Roche et.al: "automatic language recognition from broadly classified segments", "working papers in linguistics and symbol phonetics, no. 2, 1984, University of Leeds" und Moftah et.al.: "language recognition from distorted speech: comparison of techniques", Journal of the International Phonetic Assosiation (1988) 18:1,50-52.

Für die Datenprozessoren DP1, DP2 werden vorzugsweise Prozessoren der Reihe SAB 8086/80286 (Fa. Siemens) verwendet. Der Speicher CMEM1 enthält hochintegrierte dynamische RAM-Bausteine und Fehlerkorrekturschaltungen.

Der Prozessor DCL für Signalisierungssteuerung dient dem Abwickeln des HDLC-Protokolls zu den Anschlußeinheiten LTU1... LTUn und der Serviceeinheit SU.

Der Taktgenerator PCG führt die Taktversorgung der Fernmeldenebenstellenanlage durch.

Bei dem in Fig. 1 dargestellten Fernsprechvermittlungssystem können die Teilnehmeranschlußports SLMP1...SLMPx einen Sammelanschluß (station hunting, SHC) bilden, wobei an diese Teilnehmeranschlußports keine Endgeräte angeschlossen sind. Diese Ports sind konfigurierte Ports der an sich bekannten und schon beschriebenen Teilnehmeranschlußschaltungen SLM11...SLM1x. Die Endgeräte T11 und T12 sind zu einer Sammelanschlußgruppe zusammengefaßt, der auch die Endgeräte T21,T22 und T23 zugeordnet werden können. Im folgenden wird davon ausgegangen, daß T21,T22 T23 eine Konferenzverbindung bilden.

In Fig. 2a ist die Struktur einer Datenbasis DB des Fernsprechvermittlungssystems dargestellt, die beispielsweise in dem Speicher CMEM1 (Fig. 1) integriert ist. Die Datenbasis DB umfaßt Permanentspeicher SPP und dynamische Speicher, wobei die Permanentspeicher SPP Systemkonfigurationsdaten enthalten, während die dynamischen Speicher den an einem Verbindungsaufbau oder einer bestehenden Verbindung beteiligten Endgeräten dynamisch zugeordnet werden.

Die Funktion dieser Speicher wird nun anhand der Prozeduren erläutert, die die Systemsteuerung CC bei der Herstellung von Konferenzverbindungen durchführt.

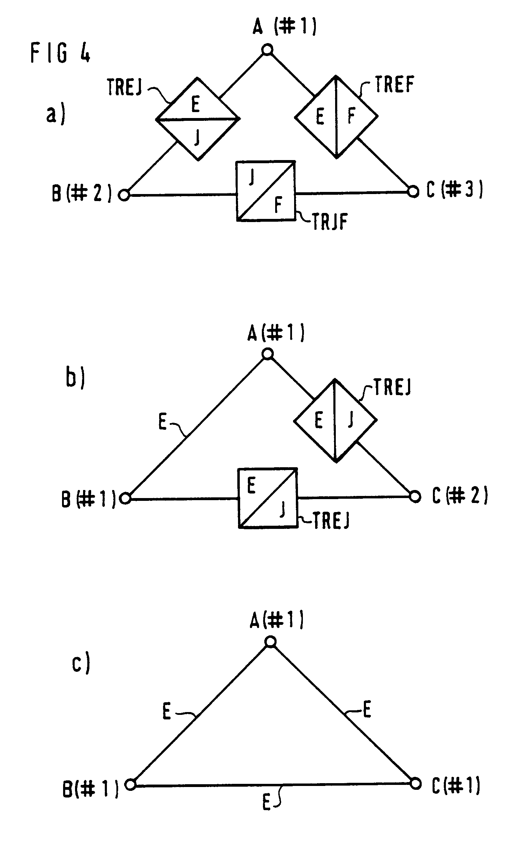

Die Herstellung einer Konferenzverbindung durch einen A-Teilnehmer umfaßt folgende Schritte: Der A-Teilnehmer (z.B. T21) wählt die Rufnummer eines B-Teilnehmers (z.B. T22). Das System stellt diese Zweierverbindung in an sich bekannter Weise her, indem die Steuerung CC auf in der Datenbasis DB im Permanentspeicher SPP abgespeicherte teilnehmerendgerätespezifische Daten zurückgreift und dem A- und B-Teilnehmer je einen ersten, auch als "Call Store" bezeichneten Speicher, beispielsweise CS1, CS2 zuordnet. Die Rechnersteuerung CC schreibt in diese Speicher, deren Struktur in Fig. 3 dargestellt ist, eine eigene Kennung des betreffenden Teilnehmers und die Kennung des jeweils anderen Verbindungspartners ein. Daran anschließend wird die Verbindung zwischen den Teilnehmern A und B über das Koppelfeld SN durchgeschaltet. Der Teilnehmer A geht in den Rückfragezustand zu einem potentiellen Konferenzverbindungspartner C (z.B. T23). Der Aufbau der Rückfrageverbindung erfolgt in an sich bekannter Weise. Nach der Herstellung der Rückfrageverbindung C betätigt A, sofern Teilnehmer C an der von A vorbereiteten Konferenzverbindung teilnehmen möchte, eine an seinem Teilnehmerendgerät befindliche Konferenztaste beziehungsweise erzeugt eine Konferenzverbindungskennung. Ausgelöst durch diesen vom Teilnehmer A erzeugten Anreiz prüft die Steuerung CC das System auf freie Konferenzsätze beziehungsweise freie zweite Speicher CB1 ... CBn. Das Kommunikationssystem enthält ebenso viele Konferenzsätze wie zweite Speicher CB1 ... CBn. Jedem Konferenzsatz ist genau ein zweiter Speicher CB1 ... CBn zugeordnet. Ergibt die Prüfung der Steuerung CC, daß im System mindestens ein freier Konferenzsatz beziehungsweise ein freier zweiter Speicher CB verfügbar ist, ordnet die Steuerung CC dem Teilnehmer A einen freien Konferenzsatz und einen freien zweiten Speicher CB zu und stellt damit die Konferenzverbindung für die Teilnehmer A, B und C her. Die Aufnahme weiterer Teilnehmer in die Konferenzverbindung erfolgt in gleicher Weise. Die Steuerung kann ferner die Berechtigung der potentiellen Konferenzverbindungsteilnehmer A, B, C zur Herstellung einer Konferenzverbindung überprüfen und greift hierzu auf die im Permanentspeicher SPP abgespeicherten teilnehmerspezifischen Berechtigungsdaten zu. Bei Beendigung der Konferenzverbindung wird der jeweilige zweite Speicher CB vom System freigegeben und steht für eine weitere Konferenzverbindung zur Verfügung.

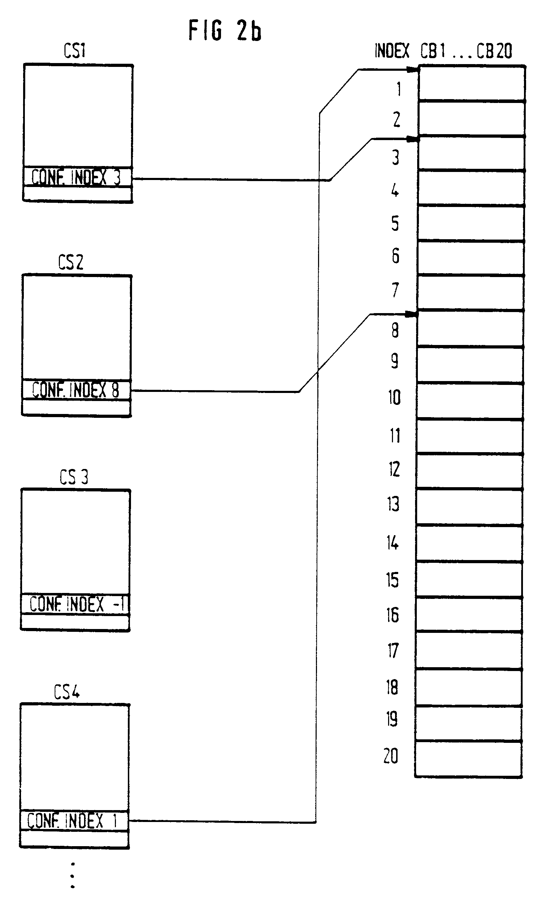

Bei dem in Fig. 2b dargestellten Ausführungsbeispiel enthält das System n = 20 zweite Speicher CB1 ... CB20. Dabei ist den in der Fig. 2b dargestellten ersten dynamischen Speichern CS1, CS2, CS4 je ein zweiter Speicher zugeordnet. Jeder erste Speicher CS1 ...CSm (m = Anzahl der ersten Speicher im System) enthält u.a. einen Speicherplatz für eine Kennung einer Konferenzverbindung. Dieser Speicherplatz ist in Fig. 2b mit "CONF. INDEX" bezeichnet. Die jeweils im Anschluß an diese Bezeichnung angegebene Zahl entspricht der Ordnungszahl der zweiten Speicher. So ist der erste Speicher CS1 dem zweiten Speicher CB3 zugeordnet, der erste Speicher CS2 dem zweiten Speicher CB8 und der erste Speicher CS3 dem zweiten Speicher CB1.

In die Speicherplätze "CONF. INDEX" erster Speicher, von Teilnehmern, die nicht an einer Konferenzverbindung beteiligt sind, wird beispielsweise "-1" eingeschrieben. Bei dem in Fig. 2b dargestellten Ausführungsbeispiel gilt dies für den ersten Speicher CS4. Das Einschreiben der "-1" in die Speicherplätze "CONF. INDEX" erfolgt bei der Einrichtung des Systems und jeweils bei der Beendigung einer Konferenzverbindung.

Fig. 3 veranschaulicht die Struktur der ersten und zweiten Speicher im Kommunikationssystem gemäß der Erfindung. Jeder erste dynamische Speicher CS, der einem an einem Verbindungsaufbau oder einer bestehenden Verbindung beteiligten Teilnehmer zugeordnet wird, weist mindestens je einen Speicherplatz für eine Kennung CRSA eines ersten Teilnehmers A, eine Kennung CRSB eines zweiten Teilnehmers B, der in einer üblichen Zweierverbindung oder auch in einer Rückfrageverbindung mit A steht und eine Kennung CRSC eines im Haltezustand oder in der eigentlichen Konferenzverbindung befindlichen dritten Teilnehmers C auf. Der Teilnehmer A bei dem beschriebenen Ausführungsbeispiel ist derjenige Teilnehmer, der eine Konferenzverbindung einleitet. Den übrigen Konferenzverbindungsteilnehmern wird jeweils auch ein erster Speicher CS zugeordnet. "Teilnehmer" kann jeweils "Endgerät" bedeuten; insoweit erfolgt eine Zuordnung von Endgeräten zu ersten Speichern CS.

Dagegen wird ein zweiter Speicher CB nur dem eine Konferenzverbindung einleitenden Teilnehmer beziehungsweise der Konferenzverbindung als solcher zugeordnet. Die Ordnungszahl des zweiten Speichers ergibt sich aus der Eintragung im Speicherplatz "CONF. INDEX" des ersten Speichers.

Die zweiten Speicher CB weisen Speicherplätze für die Kennungen der an einer bestehenden Konferenzverbindung beteiligten Teilnehmer auf. Die Kennung des die Konferenzverbindung einleitenden Teilnehmers ist in Fig. 3 mit "A", die Kennungen der übrigen an der Konferenzverbindung beteiligten Teilnehmer B, C,...X mit "CRS B, CRS C, ..., CRS X" bezeichnet. Die zweiten Speicher CB1, CB2, ..., CBn enthalten weitere verbindungstypische Daten wie Anzahl NC der an der betreffenden Konferenzverbindung beteiligten Teilnehmer, Anzahl NT der an der betreffenden Konferenzverbindung beteiligten Amtsleitungsbündel und eine Kennung ICS1 des dem die Konferenzverbindung einleitenden Teilnehmers A zugeordneten ersten Speichers CS1. Die zweiten Speicher CB1, CB2, ..., CBn enthalten ferner Speicherplätze für Informationen, die das Zuschalten von Übersetzungseinrichtungen zwischen die an der Konferenzverbindung beteiligten Endgeräte bezeichnen. Bei dem in Fig. 3 dargestellten Beispiel, das auch in Fig. 4a dargestellt ist, ist zwischen den Endgeräten A und B eine Übersetzungseinrichtung TREJ zwischengeschaltet ("AB TREJ"), während zwischen A und C die Übersetzungseinrichtung TREF ("AC TREF") und zwischen B und C die Übersetzungseinrichtung TRJF zwischengeschaltet ist ("BC TRJF"). In den zweiten Speicher CB sind also jeweils die eine bestimmte Konferenzverbindung beschreibenden Daten eingeschrieben, während in den ersten Speicher CS der Konferenzverbindungsteilnehmer nur die Eintragung im Speicherplatz "CONF. INDEX" auf die jeweilige Konferenzverbindung hinweist.

Das Fernsprechvermittlungssystem kann in der Weise ausgebildet sein, daß die Permanentspeicher SPP Daten von mehreren, an Konferenzverbindungen fest zu beteiligenden Teilnehmern enthalten. Jeder Teilnehmer einer Konferenzverbindung mit festgelegtem Teilnehmerkreis kann durch Betätigung einer Konferenztaste an seinem Teilnehmergerät oder durch Auslösung eines entsprechenden Anreizes eine Konferenzverbindung einleiten. Das System prüft dann selbsttätig den Verbindungszustand der übrigen für die Konferenzverbindung vorgesehenen Teilnehmer und stellt die Konferenzverbindung mit denjenigen Teilnehmern her, die sich zuvor im Freizustand befinden.

Fig. 4 zeigt verschiedene Konfigurationen der Endgeräte A, B,C, die an einer Konferenzverbindung beteiligt sind. Bei dem in Fig. 4a dargestellten Ausführungsbeispiel ist zwischen die Endgeräte A und B die Übersetzungseinrichtung TREJ zwischengeschaltet, die die Übersetzung von der englischen in die japanische Sprache bzw. von der japanischen in die englische Sprache realisiert. Zwischen die Endgeräte A und C ist die Übersetzungseinrichtung TREF zwischengeschaltet, die die Übersetzung von der englischen in die französische Sprache bzw. von der französischen in die englische Sprache realisiert. Zwischen die Endgeräte B und C ist eine Übersetzungseinrichtung TRJF zwischengeschaltet, die eine Übersetzung von der japanischen in die französische Sprache und von der französischen in die japanische Sprache realisiert. Die Zwischenschaltung der einzelnen Übersetzungseinrichtungen erfolgt, wie noch beschrieben wird, anhand von Informationen, die beispielsweise nur in das Teilnehmerendgerät A oder beispielsweise in die Teilnehmerendgeräte A, B, C eingegeben werden.

Bei dem in Fig. 4b dargestellten Ausführungsbeispiel ist zwischen die Endgeräte A und C die Übersetzungseinrichtung TREJ zwischengeschaltet, die eine Übersetzung von der englischen in die japanische Sprache und von der japanischen Sprache in die englische Sprache realisiert. Zwischen die Endgeräte B und C ist ebenfalls eine Übersetzungseinrichtung TREJ zwischengeschaltet, die ebenfalls eine Übersetzung von der englischen in die japanische Sprache und von der japanischen Sprache in die englische Sprache realisiert. Zwischen die Endgeräte A und B ist keine Übersetzungseinrichtung zwischengeschaltet, da die in das Endgerät A bzw. in A und B eingegebenen Informationen den Wunsch der entsprechenden Bedienpersonen von A und B bezeichnen, das Gespräch im Rahmen der Konferenzverbindung in der englischen Sprache (E) zu führen.

Bei dem in Fig. 4c dargestellten Beispiel ist zwischen keines der Endgeräte A,B und C eine Übersetzungseinrichtung zwischengeschaltet, da die in A bzw. in A,B und C eingegebenen Informationen den Wunsch der Bedienpersonen von A,B und C bezeichnen, das Gespräch im Rahmen der Konferenzverbindung in der englischen Sprache (E) zu führen.

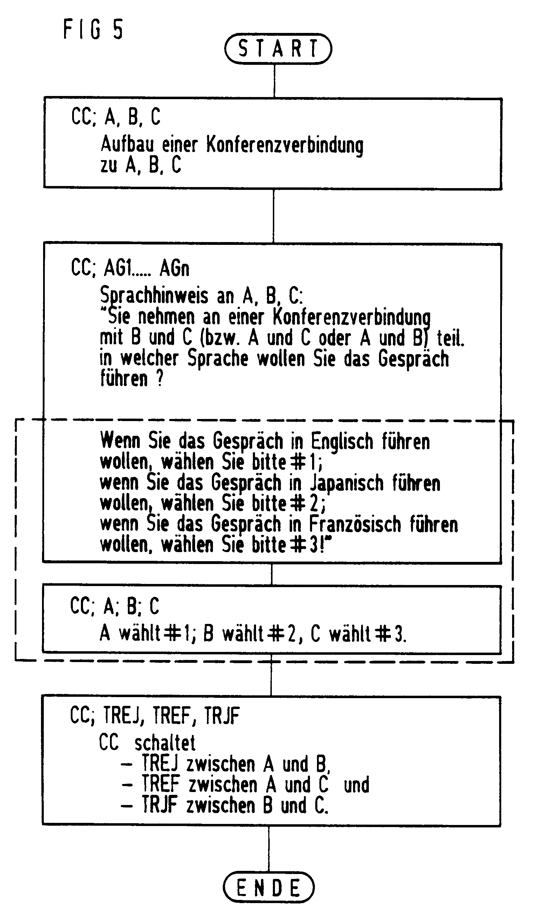

Eine Ausführungsform des erfindungsgemäßen Verfahrens wird nun anhand des Flußdiagramms nach Fig. 5 beschrieben.

Das erfindungsgemäße Verfahren beginnt mit dem an sich bekannten und auch schon oben beschriebenen Aufbau der Konferenzverbindung zu A,B und C. Im Anschluß an den Aufbau der Konferenzverbindung veranlaßt die zentrale Steuerung CC mittels der Ansagegeräte AG1... das Zusprechen beispielsweise des folgenden Sprachhinweises an A: "Sie nehmen an einer Konferenzverbindung mit B (Rufnummer von B) und C (Rufnummer von C) teil.

In welcher Sprache wollen Sie das Gespräch führen?
Wenn Sie das Gespräch in der englischen Sprache führen wollen, wählen Sie bitte eine "1";
wenn Sie das Gespräch in der japanischen Sprache führen wollen, wählen Sie bitte eine "2";
wenn Sie das Gespräch in der französischen Sprache führen wollen, wählen Sie bitte eine "3"!"
B und C erhalten einen entsprechenden Sprachhinweis.

Dieser Sprachhinweis wird beispielsweise in der jeweiligen Landessprache bzw. in der englischen Sprache zugesprochen. In der Datenbasis DB (Fig. 2a) kann im Speicher SPP für vorbestimmte Endgeräte eine Information über die Sprache abgespeichert sein, in der der zuvor erwähnte Sprachhinweis zugesprochen wird.

Es wird nun davon ausgegangen, daß die Bedienperson des Endgeräts A eine "1" wählt, während die Bedienperson von B eine "2" und die Bedienperson von C eine "3" wählt. Die Steuerung CC wertet diese gewählten Informationen aus und schaltet, wie dies in den Fig. 4a und in Fig. 3 (Speicher CB3: Zeilen AB,AC,BC) dargestellt ist.

Die in Fig. 5 durch einen gestrichelten Rahmen hervorgehobenen Verfahrensschritte (Sprachhinweis zur Aufforderung der Wahl vorbestimmter Ziffern, Wahl dieser Ziffern) können bei anderen Ausführungsformen der Erfindung durch Verfahrensschritte ersetzt werden, die im folgenden beschrieben werden.

Nach einer weiteren Ausführungsform der Erfindung werden die in das jeweilige Teilnehmerendgerät eingegebenen Informationen nicht durch Wahl einer Rufnummer gebildet, sondern durch Sprachproben der Konferenzteilnehmer. Die Konferenzteilnehmer werden dementsprechend dazu durch einen Sprachhinweis aufgefordert, einen oder mehrere Sprachproben derjenigen Sprache in den Handapparat des jeweiligen Teilnehmerendgeräts einzugeben, in der der betreffende Konferenzteilnehmer das Gespräch im Rahmen der hergestellten Konferenzverbindung führen will. Hierzu aktiviert die Steuerung CC die anhand von Fig. 1 genannte Spracherkennungseinrichtung LCR. Diese Einrichtung gibt ausgangsseitig eine Information ab, die wie bei der zuvor beschriebenen und in der Fig. 5 explizit dargestellten Ausführungsform der Erfindung die jeweilige Sprache des des Konferenzteilnehmers bezeichnet.

Nach einer weiteren Ausführungsform des erfindungsgemäßen Verfahrens sind in die an der Konferenzverbindung beteiligten Teilnehmerendgeräte A,B,C mehrere, verschiedene Sprachen bezeichnende Informationen eingebbar. Dabei kann vorgesehen sein, daß zunächst eine erste Information in das jeweilige Teilnehmerendgerät einzugeben ist, die die bevorzugte Sprache, z.B. die Muttersprache des Konferenzteilnehmers bezeichnet und daß daran anschließend eine zweite Information einzugeben ist, die die Sprache bezeichnet, die der betreffende Konferenzteilnehmer als Alternative zu der erstgenannten Sprache wünscht ("2. Wahl"). Hierbei können sich beispielsweise die folgenden Kombinationen ergeben, wobei "#0" entweder bedeutet, daß der jeweilige Konferenzteilnehmer keine Information über eine zweite Sprache eingibt bzw. die Information eingibt, daß keine zweite Sprache als Konferenzsprache gewünscht wird:
a)
   A #1, #0
   B #2, #0
   C #3, #0
B)
   A #1, #3
   B #1, #0
   C #2, #0
C)
   A #1, #0
   B #2, #1
   C #3, #1
Vorzugsweise werden die genannten Informationen unmittelbar nach dem Aufbau der Konferenzverbindung in die betreffenden Teilnehmerendgeräte eingegeben. Es ist jedoch auch möglich, beispielsweise durch Nachwahl einer Rufnummer, die die jeweiligen von dem betreffenden Konferenzteilnehmer aktuell verwendete bzw. gewünschte Sprache bezeichnet, während des Gesprächs eine Übersetzungseinrichtung zwischen die entsprechenden Teilnehmerendgeräte einzuschleifen.

Die Informationen über die gewünschte Sprache werden vorzugsweise in die Teilnehmerendgeräte der Konferenzteilnehmer eingegeben. Es kann auch vorgesehen sein, daß diese Informationen nur in ein Teilnehmerendgerät, z.B. in das Teilnehmerendgerät des die Konferenzverbindung einleitenden Teilnehmers eingegeben werden.

Alternativ kann für bestimmte Endgeräte die Benutzung in einer bestimmten Sprache vorgesehen sein. Hierzu werden entsprechende Informationen bzw. Konfigurationsdaten über die betriebstechnische Einheit ADS beispielsweise in den Speicher SPP eingegeben. Eine Anwendung für diese Ausführungsform besteht in Nebenstellenanlagen, die von Personen unterschiedlicher Sprache benutzt werden, wobei Endgeräte bestimmten Personen fest zugeordnet sind. Es erübrigt sich dann für die den Endgeräten zugeordneten Personen, die Informationen, die die gewünschte Konferenzsprache bezeichnen, entweder durch Wahl einer Rufnummer oder durch entsprechende Sprachproben in das Teilnehmerendgerät einzugeben. Im Rahmen der Bedienerführung wird der jeweilige Konferenzteilnehmer auf die Zwischenschaltung einer Übersetzungseinrichtung hingewiesen.

## Patentansprüche

1. Verfahren zur Herstellung von Konferenzverbindungen in einem rechnergesteuerten Fernsprechvermittlungssystem (PBX) mit einem Steuerwerk (CC), das die zur Realisierung der Konferenzverbindungen erforderlichen vermittlungstechnischen Prozeduren steuert,
**dadurch gekennzeichnet,**
daß ein dem Steuerwerk (CC) zugeordnetes Programm in der Weise ausgestaltet ist, daß in Abhängigkeit von in ein oder in mehrere an der Konferenzverbindung beteiligte Teilnehmerendgeräte (A,B,C) eingebbare Informationen eine oder mehrere automatische Übersetzungseinrichtungen (TREJ, TREF,TRJF) zwischen jeweils zwei an der Konferenzverbindung beteiligte Endgeräte (AB,AC,BC) eingeschleift werden.

2. Verfahren nach Anspruch 1,
**dadurch gekennzeichnet,**
daß die Informationen durch Wahl einer Rufnummer am jeweiligen Teilnehmerendgerät (A,B,C) gebildet werden.

3. Verfahren nach Anspruch 2,
**dadurch gekennzeichnet,**
daß die Informationen durch in das jeweilige Teilnehmerendgerät (A,B,C) eingegebene Sprachproben der Konferenzteilnehmer gebildet werden.

4. Verfahren nach einem der vorstehenden Ansprüche,
**dadurch gekennzeichnet,**
daß das dem Steuerwerk (CC) zugeordnete Programm in der Weise ausgestaltet ist, daß bei übereinstimmenden, dieselbe Sprache bezeichnenden Informationen zwischen den entsprechenden Teilnehmerendgeräten (AB,AC,BC) keine Übersetzungseinrichtung (TREJ,TREF,TRJF) eingeschleift wird.

5. Verfahren nach einem der vorstehenden Ansprüche,
**dadurch gekennzeichnet,**
daß das dem Steuerwerk (CC) zugeordnete Programm in der Weise ausgestaltet ist, daß in die an der Konferenzverbindung beteiligten Teilnehmerendgeräte (A,B,C) mehrere verschiedene Sprachen bezeichnende Informationen eingebbar sind, und daß in Abhängigkeit der eingegebenen Informationen automatische Übersetzungseinrichtungen (TREJ, TREF,TRJF) nur zwischen die Teilnehmerendgeräte (AB,AC,BC) eingeschleift werden, für die keine dieselbe Sprache bezeichnenden Informationen eingegeben wurden.

6. Anordnung zur Herstellung von Konferenzverbindungen bestehend aus einem Fernsprechvermittlungssystem (PBX) mit einem Steuerwerk (CC),
**dadurch gekennzeichnet,**
daß die Anordnung Übersetzungseinrichtungen (TREJ,TREF, TRJF) aufweist und daß dem Steuerwerk (CC) ein Programm zugeordnet ist, das die Schritte des Verfahrens nach einem der vorstehenden Ansprüche definiert.

7. Anordnung nach Anspruch 6,
**dadurch gekennzeichnet,**
daß die Anordnung eine unterschiedliche Sprachen erkennende Spracherkennungseinrichtung (LRV) aufweist.
